# EUROPÄISCHE PATENTSCHRIFT

(11) **EP 1 470 624 B1**
(45) Veröffentlichungstag und Bekanntmachung des Hinweises auf die Patenterteilung: **21.04.2010**
(21) Anmeldenummer: 03708007.4
(22) Anmeldetag: 22.01.2003
(51) Int. Cl.: H02B 11/127

(54) **GERÄTEEINSCHUB FÜR EINE SCHALTANLAGE MIT HILFSTRENNKONTAKTEN**
WITHDRAWABLE UNIT FOR A SWITCH DEVICE WITH AUXILIARY DISCONNECTOR CONTACTS
UNITE ENFICHABLE POUR UN DISPOSITIF DE CONNEXION DOTE DE CONTACTS DE COUPURE AUXILIAIRES

(30) Priorität: 30.01.2002 DE 10204226
(43) Veröffentlichungstag der Anmeldung: 27.10.2004
(73) Patentinhaber: SIEMENS AKTIENGESELLSCHAFT, 80333 München (DE)
(72) Erfinder: KULACOGLU, Nesat, 81430 Kartal/Istanbul (TR); SCHMIDT, Mario, 04178 Leipzig (DE); ZICKMANTEL, Mathias, 04329 Leipzig (DE)
(86) Internationale Anmeldenummer: PCT/DE2003/000194
(87) Internationale Veröffentlichungsnummer: WO 2003/065529

(56) Entgegenhaltungen:
- EP-A- 1 089 408
- DE-C- 4 313 661
- GB-A- 1 601 399

## Beschreibung

Die Erfindung betrifft einen Geräteeinschub für eine Schaltanlage mit Hilfstrennkontakten, die mittels einer am Geräteeinschub angeordneten und an einer Bedienfront zugänglichen Betätigungsvorrichtung zu schließen oder zu öffnen sind, wobei am Geräteeinschub eine den Hilfstrennkontakten zugehörige Kontakteinheit mittels eines Schiebers bewegbar geführt ist.

Ein Geräteeinschub dieser Art ist z. B. durch die DE 199 48 697 A1 bekannt geworden. Hierbei ist die Kontakteinheit an der Rückseite des Geräteeinschubes angeordnet und ist mittels eines an der Bedienfront des Geräteeinschubes vorgesehenen Griffstückes (Knauf oder ähnlich) zu bedienen. Das Griffstück ist an dem Schieber angebracht, der als Mittel zur geradlinig verschiebbaren Führung der Kontakteinheit vorgesehen ist. Deshalb nimmt das Griffstück eine von der Bedienfront relativ abstehende Position ein, wenn die Hilfstrennkontakte nicht im Eingriff stehen.

Für Haupttrennkontakte ist es bei einem Geräteeinschub nach der DE 27 17 691 A1 bereits bekannt, einen Schneckenantrieb zu benutzen, der an der Bedienfront des Geräteinschubes durch ein Werkzeug betätigt werden kann. Durch eine Schnecke wird dabei ein Schieber verschoben, auf nahe der Rückseite des Geräteinschubes Kontakteinheiten der Haupttrennkontakte trägt. Bei dem gleichen bekannten Geräteeinschub sind Hilfstrennkontakte vorhanden, die jedoch beim Einsetzen des Geräteeinschubes in eine zugehörige Schaltanlage zwangsläufig miteinander in Eingriff treten. Diese Hilfstrennkontakte werden jedoch erst wirksam, wenn der Schneckenantrieb der Haupttrennkontakte betätigt wird, da mit diesem ein Hilfsschalter gekoppelt ist, der die Hilfsspannung zur Betätigung der Schütze usw. freigibt.

In der älteren Patentanmeldung DE 101 20 737.9 vom 20.04.2001 ist ein weiterer Geräteeinschub beschrieben mit dem Hinweis, dass Hilfstrennkontakte durch einen Schnecken- oder Schraubenantrieb ähnlich der DE 27 17 691 A1 betätigt werden können.

Der Erfindung liegt die Aufgabe zu Grunde, die Betätigung von Hilfstrennkontakten bei Geräteeinschüben zu verbessern und sieht hierzu vor, dass die Betätigungsvorrichtung eine im Geräteeinschub drehbar gelagerte und mittels eines Werkzeuges betätigbare Welle aufweist und dass an dem Schieber eine Kulissenanordnung angebracht ist, die mit einem von der Welle radial abragenden Steuerstift zusammenwirkt.

Bei gleicher vorteilhafter Funktion wie bei einer Schneckenanordnung nach der DE 27 17 691 A1 ist die Betätigungsvorrichtung nach der Erfindung einfacher herstellbar und montierbar. Insbesondere erlaubt es die Zuordnung einer Kulissenanordnung zu dem Schieber der Kontakteinheit, beide Teile (Schieber und Kulissenanordnung) als einteiliges Blechteil auszubilden. Besteht aber Bedarf an einer größeren Kraftübersetzung, wie sie beispielsweise bei vielpoligen Hilfstrennkontakten erwünscht sein kann, so lässt sich ein entsprechender Bewegungsablauf nach einer Ausgestaltung der Erfindung dadurch erzielen, dass die Kulissenanordnung einen Schneckengang mit wenigstens zwei Abschnitten von unterschiedlicher Steigung aufweist, von denen der eine Abschnitt bezogen auf eine Drehung der Welle eine zum Schließen der Hilfstrennkontakte geeignete erhöhte Kraftübersetzung aufweist. Der andere Abschnitt kann dabei zweckmäßig derart bemessen sein, dass entlang einem verhältnismäßig kurzen Drehwinkel der Welle der Leerweg der Kontakteinheit von ihrer Ruhestellung bis zur ersten Kontaktberührung mit dem ortsfesten Teil der Hilfstrennkontakte durchlaufen wird.

Eine Kulissenanordnung mit dieser Eigenschaft kann in vorteilhafter Weise derart gestaltet sein, dass zwei mit dem Schieber fest verbundene, hohlzylindrische und zu der Welle koaxial angeordnete Kulissenkörper vorgesehen sind, deren einander zugewandte Stirnflächen einen den Steuerstift aufnehmenden Schneckengang begrenzen. Die getrennten Kulissenkörper sind im Vergleich zu einem zusammenhängenden Schneckenkörper wesentlich einfacher herzustellen und gestatten es, mit geringem Aufwand eine gewünschte Abhängigkeit des Betätigungsweges bzw. Drehwinkels von der anzuwendenden Kraft zu verwirklichen.

Eine weitere nützliche und aufgrund der axial geteilten Kulissenanordnung leicht zu realisierende Abwandlung kann darin bestehen, dass der Schneckengang an wenigstens einem Ende einen Abschnitt mit entgegengesetzter Steigung aufweist und dass eine die Kulissenanordnung axial vorspannende Feder eine Rastung der Welle in einer Endstellung bewirkt.

Wie schon einleitend erwähnt, gehören einfache Herstellbarkeit und leichte Montage der Hilfstrennkontaktanordnung zu den Anliegen der Erfindung. Hierzu kann dadurch beigetragen werden, dass die Kulissenkörper je einen radial abragenden Flansch und der Schieber einen mit den Flanschen zu verbindenden Tragschenkel besitzen. Durch die Bemessung des Tragschenkels und der Flansche ist dabei zugleich der für den Eingriff des Steuerstiftes erforderliche Abstand der Kulissenkörper gegeben. Zweckmäßig sind dabei die Flansche und der Tragschenkel parallel zu einander angeordnet und mittels durchgehender Befestigungsmittels fluchtend und unverdrehbar verbunden.

Wie dies an sich bekannt ist, kann die Welle stirnseitig mit einer zur Verbindung mit einem Werkzeug geeigneten Kontur versehen sein. Dabei eignen sich zur Betätigung der Welle sowohl abnehmbare Werkzeuge in der Gestalt einer bekannten Handkurbel als auch dauernd mit der Welle in Verbindung stehende Werkzeuge, z. B. ein Drehknauf.

Die Erfindung wird im folgenden anhand des in den Figuren dargestellten Ausführungsbeispieles näher erläutert.

Die Figur 1 zeigt einen Geräteeinschub für Niederspannungs-Schaltanlage mit einer Betätigungsvorrichtung für Hilfstrennkontakte in der Draufsicht.

Die Figur 2 zeigt als erstes Beispiel einer Betätigungsvorrichtung einen Schieber mit einer daran angebrachten Kulissenanordnung in Verbindung mit einer zur Betätigung des Schiebers vorgesehenen Welle.

Die Figur 3 zeigt eine weiteres Beispiel einer Betätigungsvorrichtung der Hilfstrennkontakte im zusammengebauten Zustand zusammen mit einem Schieber als Träger einer bewegbaren Kontakteinheit der Hilfstrennkontakte.

In der Figur 4 sind wesentliche Bestandteile der Betätigungsvorrichtung gemäß der Figur 3 in einer perspektivisch auseinander gezogenen Darstellung gezeigt.

Die Figur 5 zeigt die rechte vordere Ecke des Geräteeinschubes gemäß der Figur 1 in einer perspektivischen Darstellung, wobei sich die Betätigungsvorrichtung der Hilfstrennkontakte gemäß den Figuren 3 und 4 in der Position "Hilfstrennkontakte geöffnet" befindet.

Die Figur 6 zeigt eine der Figur 5 entsprechende Darstellung, wobei sich die Betätigungsvorrichtung in der Position "Hilfstrennkontakte geschlossen" befindet.

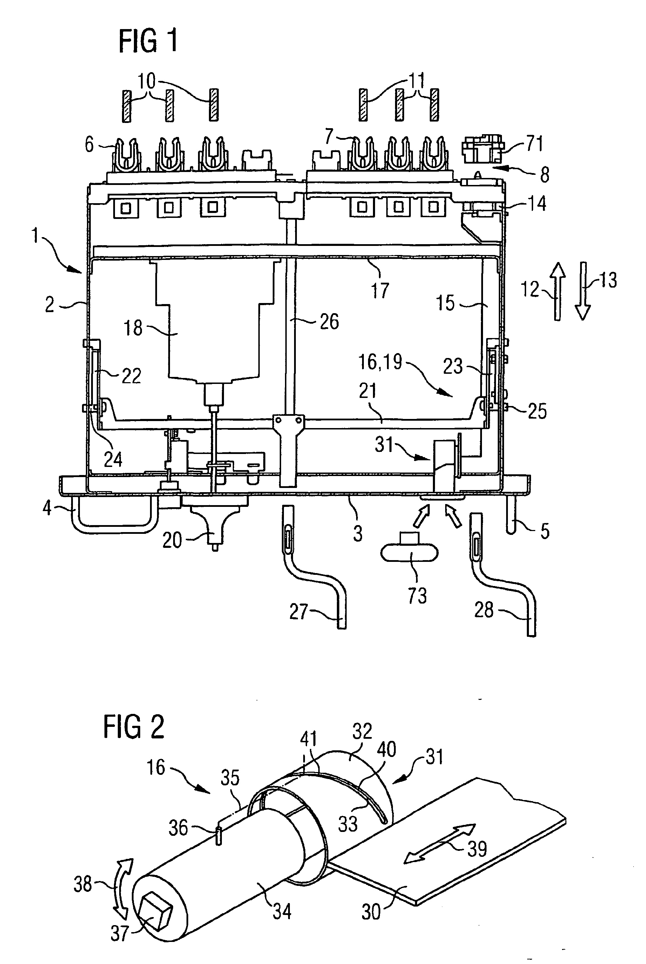

Ein in der Figur 1 in der Draufsicht gezeigter Geräteeinschub 1 für eine Niederspannungs-Schaltanlage weist einen Rahmen bzw. ein Gehäuse 2 auf, an dessen Vorderseite sich eine Bedienfront 3 mit Handgriffen 4 und 5 und an dessen Rückseite sich Haupttrennkontakte 6 und 7 sowie Hilfstrennkontakte 8 befinden. Dabei dienen die Haupttrennkontakte 6 der Zuführung von Energie, während die Haupttrennkontakte 7 einen Verbraucherabgang darstellen. Die Haupttrennkontakte 6 und 7 werden in bekannter Weise mit ortsfesten Feldschienen bzw. Gegenkontakten 10 und 11 durch Verschieben des Geräteeinschubes 1 in der Richtung eines Pfeiles 12 in Eingriff gebracht und durch Verschieben in der Richtung eines Pfeiles 13 von diesen getrennt. Zu den Hilfstrennkontakten 8 gehört eine Kontakteinheit 14, die am hinteren Ende eines im Rahmen 2 geradlinig verschiebbar geführten Schiebers 15 befestigt ist. Der Schieber 15 ist gleichfalls in der Richtung der Pfeile 12 und 13 durch eine Betätigungsvorrichtung 16 bzw. 19 verschiebbar, die noch eingehend erläutert werden.

Der Geräteeinschub 1 weist ferner eine parallel zur Bedienfront 3 angeordnete Traglatte 17 für Geräte der Schalt-, Steuer- und Schutztechnik auf. Von diesen ist lediglich ein Hauptschalter 18 angedeutet, der mittels eines an der Bedienfront 3 befindlichen Drehgriffes 20 zu betätigen ist. Ferner weist der Geräteeinschub 1 einen sich im wesentlichen über die ganze Breite des Rahmens 2 erstreckenden Verriegelungsbalken 21 auf, der mittels Schwenkarmen 22 und 23 in Seitenwänden des Rahmens 2 schwenkbar gelagert ist und der über den Rahmen 2 vorstehende Verriegelungsnasen 24 und 25 aufweist, die mit nicht gezeigten ortsfesten Positionskulissen zusammenwirken. Diese dienen in bekannter Weise dazu, den Geräteeinschub 1 insbesondere in den Positionen "getrennt" (disconnected) und "Betrieb" (connected) zu sichern und zugleich die erforderlichen Verriegelungen gegenüber dem Hauptschalter 18 und ggf. einem Fahrantrieb sicherzustellen. Eine Gewindespindel 26 mit zugehöriger bei Bedarf aufsteckbarer Handkurbel 27 als Bestandteile eines solchen Fahrantriebes sind in der Figur 1 gleichfalls gezeigt. Eine Werkzeug 28, das ähnlich der Handkurbel 27 oder als Schlüssel gestaltet sein kann, ist als Mittel zur Bedienung der Betätigungsvorrichtungen 16 bzw. 19 angedeutet.

Anhand der Figur wird zunächst ein erstes Ausführungsbeispiel einer Betätigungsvorrichtung für die Hilfstrennkontakte 8 erläutert.

Die Figur 2 ist eine schematische perspektivische Darstellung ohne Führungs- und Lagerteile des Gehäuses 2 (Figur 1). Abgebrochen ist ein Schieber 30 gezeigt, der mit einer Kulissenanordnung 31 versehen ist. Diese weist einen als Blechteil ausgebildeten Kulissenkörper 32 auf, der einen Schneckengang 33 besitzt. Dabei kann der Kulissenkörper 32 mit dem Schieber 30 ein einziges Stanzteil bilden, in welches im ebenen Zustand der Schneckengang 32 als Schlitz durch Stanzen eingebracht ist. Anschließend wird der Kulissenkörper 32 durch Biegen in die gezeigte offene oder geschlossene zylindrische Gestalt umgeformt, die einer Welle 34 angepasst ist. Der gleiche Vorteil einer einfachen Herstellbarkeit des Schneckenganges 33 wird erreicht, wenn der Kulissenkörper 32 als gesondertes Teil hergestellt und in geeigneter Weise mit dem Schieber 30 verbunden wird. Dabei kann die Umformung in die gezeigte hohlzylindrische Gestalt sowohl vor als auch nach der Verbindung mit dem Schieber 30 erfolgen.

In der Figur 2 ist die Welle 34 von der Kulissenanordnung 31 entfernt dargestellt, um den Kulissenkörper 32 weniger zu verdecken. Durch eine strichpunktierte Linie 35 ist angedeutet, dass ein in der Welle 34 sitzender und radial abragender Steuerstift 36 zum Eingreifen in den Schneckengang 33 vorgesehen ist. In ihrer montierten Position ist die Welle drehbar gelagert (z. B. in der Bedienfront 3 in der Figur 1) und axial gegen eine Verschiebung abgestützt. Stirnseitig ist die Welle 34 mit einer Kontur 37 versehen, die als Vierkantansatz dargestellt ist. Mittels eines der Kontur 37 angepassten Werkzeuges (vgl. Werkzeug 28 in der Figur 1) kann die Welle 34 entsprechend dem Pfeil 38 gedreht und hierdurch der Schieber 30 entsprechend einem Pfeil 39 verschoben werden.

In der Figur 2 ist angedeutet, dass der Schneckengang 33 zwei Abschnitte 40 und 41 aufweist, deren Steigung unterschiedlich ist. Diese Gestaltung bewirkt, dass sich bei gleichem Drehwinkel der Welle 34 unterschiedliche Wege des Schiebers 30 ergeben, wenn sich der Steuerstift 36 in dem Abschnitt 40 oder dem Abschnitt 41 befindet. Auf diese Weise wird beim Schließen der Hilfstrennkontakte 8 ein rascher Vorschub bis zur Berührung erreicht und anschließend trotz größeren Kraftbedarfes für den Eingriff der Kontaktglieder eine relativ geringe Betätigungskraft am Werkzeug für die Welle 34.

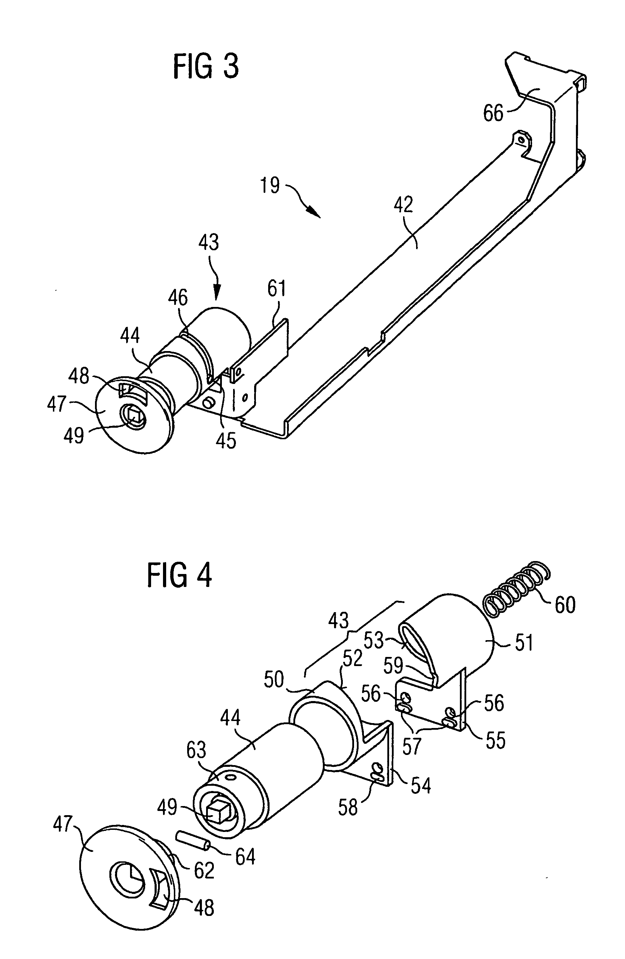

Ein weiteres Ausführungsbeispiel für eine Betätigungsvorrichtung 19 wird im Folgenden anhand der Figuren 3 und 4 erläutert. Dabei ist die Betätigungsvorrichtung 19 in der Figur 3 im montierten und in der Figur 4 im perspektivisch zerlegten Zustand dargestellt.

Ähnlich wie die Figur 2 zeigt die Figur 3 einen Schieber 42, der mit einer Kulissenanordnung 43 versehen ist. Diese umschließt eine Welle 44, die mittels eines Steuerstiftes 45 in einen Schneckengang 46 eingreift. Stirnseitig ist die Welle 44 mit einem Blendkragen 47 versehen, der ein Sichtfenster 48 für Beschriftungen der Bedienfront (3 in Figur 1) sowie eine Öffnung für den Zugang zu einer Kontur 49 der Welle 44 aufweist.

Die Kulissenanordnung 43 umfasst gemäß der Figur 4 zwei Kulissenkörper 50 und 51, deren einander zugewandte Stirnseiten 52 bzw. 53 den Schneckengang 46 bilden. Der hierzu erforderliche Abstand wird durch Flansche 54 und 55 erreicht, die radial von den Kulissenkörpern 50 und 51 abstehen und die mit Durchgangslöchern 56 zur Verbindung und Befestigung versehen sind. Um eine einfache Montage ohne Justierung zu ermöglichen, ist der Flansch 55 mit zwei in der Richtung des Flansches 54 vorstehenden prismatischen Zapfen versehen, zu deren Aufnahme der Flansch 54 Ausnehmungen 58 besitzt. In der Stirnfläche des Kulissenkörpers 51, welche die eine Wandung des Schneckenganges 46 bildet, ist ein Rücksprung 59 angeordnet, in den unter dem Einfluss einer axial wirkenden Feder 60 der in der Figur 4 verdeckte Steuerstift 45 (Figur 3) eintreten kann. Die Anordnung ergibt am Ende des Schneckenganges 46 eine Rastung. Eine gleiche Vertiefung kann am entgegengesetzten Ende des Schneckenganges (in der Figur 4 verdeckt) sinngemäß angeordnet sein.

Zur Verbindung der Kulissenanordnung 43 mit dem Schieber 42 ist dieser mit einem Tragschenkel 61 versehen. Der Blendkragen 47 ist mit einem rohrförmigen Ansatz 62 versehen, der einem zylindrischen Absatz 63 der Welle 44 angepasst ist und mit dieser durch einen Stift 64 zu verbinden ist. Der Schieber 42 (Figur 3) ist an seinem hinteren Ende mit einem abgewinkelten Montageschenkel 65 zur Aufnahme der Kontakteinheit 14 versehen.

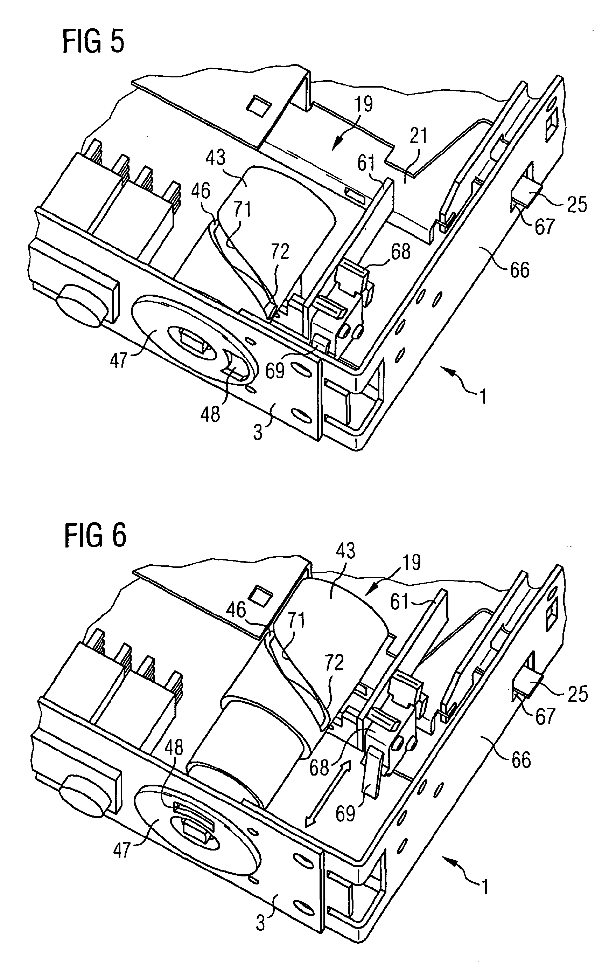

In den Figuren 5 und 6 ist die anhand der Figuren 3 und 4 erläuterte Betätigungsvorrichtung im montierten Zustand zusammen mit der vorderen rechten Ecke des Geräteeinschubes 1 gemäß der Figur 1 gezeigt.

Die Figuren 5 und 6 zeigen neben den bereits anhand der Figur 1 erläuterten Teilen, insbesondere Bedienfront 3 und Verriegelungsbalken 21 eine Seitenwand 66 mit einem Durchtrittsfenster 67 für die Rastnase 25 sowie einen Hilfsschalter 68, der an dem Tragschenkel 61 des Schiebers 42 angebracht ist. Dabei befindet sich die Betätigungsvorrichtung in der Figur 5 in der Stellung der geöffneten Hilfstrennkontakte. Dies ist daran erkennbar, dass die Kulissenanordnung 43 ganz nach vorn verschoben ist und der Hilfsschalter 68 mit seinem Schaltarm 69 an der Innenseite der Bedienfront 3 oder einem gesonderten Anschlag anliegt. Das Sichtfenster 48 des Blendkragens 47 steht seitlich rechts über einer entsprechenden Beschriftung der Bedienfront 3.

Durch eine Drehung der Welle 44 nach rechts um etwa 270° wird die Kulissenanordnung mit dem Schieber 42 nach hinten verschoben, um die Kontakteinheit 14 (Figur 1) mit der ortsfesten Kontakteinheit 70 in Eingriff zu bringen. Der Schaltarm 69 des Hilfsschalters 68 entfernt sich dabei von seinem Anschlag und signalisiert die veränderte Schaltstellung.

Beide Figuren 5 und 6 zeigen zwei Abschnitte 71 und 72 des Schneckenganges mit unterschiedlicher Steigung. Beim Schließen der Hilfstrennkontakte wird zunächst der Abschnitt 71 mit größerer Steigung durchlaufen. Dabei wird der Leerhub durchlaufen, um die bewegbare Kontakteinheit aus der Trennstellung an die ortsfesten Kontakteinheit 70 anzunähern. Der zweite Abschnitt 72 des Schneckenganges 46 weist eine geringere Steigung auf und ergibt hierdurch bei gleicher Drehung der Welle 44 eine geringere Verschiebung der Kulissenanordnung 43, was einer stärkeren Kraftübersetzung entspricht. Entlang dem Abschnitt 72 werden die Kontaktglieder der Kontakteinheiten 14 und 70 miteinander in Eingriff gebracht.

Die Kulissenkörper 50 und 51 sind zweckmäßig als Formstücke aus Metall oder Kunststoff im Druckguss- bzw. Spritzgussverfahren herzustellen. Hierbei werden die Flächen, welche nach dem Zusammenfügen den Schneckengang 43 ergeben, mit allen benötigten Merkmalen durch die Wandungen der Gieß- bzw. Spritzformform gebildet und entstehen somit ohne nachträgliche Bearbeitung der Guss- bzw. Spritzteile.

Als Werkzeug zur Bedienung der Welle (34 in Figur 2, 44 in den Figuren 3 bis 6) wurde bereits eine bekannte Handkurbel 28 (Figur 1) erwähnt. Diese kann bei Bedarf auf die beschriebene Kontur an der Stirnseite der Welle (31 in Figur 2, 49 in Figur3) aufgesteckt werden und weist hierzu ein passend geformtes Gegenstück auf. Wenn aber der Geräteeinschub häufig zu bedienen ist kann es vorteilhaft sein, wenn die Hilfstrennkontakte direkt betätigt zu betätigen sind. Dies kann dadurch erreicht werden, dass anstelle der Handkurbel ein Werkzeug 73 in der Gestalt eines Drehknaufes benutzt wird, wie es in der Figur 1 gezeigt ist. Dabei kann die Verbindung dieses Drehknaufes mit der Welle der Betätigungsvorrichtung gleichfalls durch eine geeignete Kontur erfolgen. Falls eine Abnahme nicht vorgesehen oder unerwünscht ist, kann der Drehknauf durch geeignete Mittel wie einen Splint, Kerbstift oder ähnlich gesichert werden.

### Bezugszeichenliste

- 1: Geräteeinschub
- 2: Rahmen
- 3: Bedienfront
- 4: Handgriff
- 5: Handgriff
- 6: Haupttrennkontakt (Einspeisung)
- 7: Haupttrennkonakt (Abgang)
- 8: Hilfstrennkontakte
- 10: Feldschienen
- 11: Gegenkontakt
- 12: Pfeil für Verschiebung des Geräteeinschubes beim Einfahren
- 13: Pfeil für Bewegungsrichtung des Geräteeinschubes 1 beim Ausfahren
- 14: Kontakteinheit
- 15: Schieber
- 16: Betätigungsvorrichtung (Figur 2)
- 17: Tragplatte
- 18: Hauptschalter
- 19: Betätigungsvorrichtung (Figuren 3, 4, 5, 6)
- 20: Drehgriff
- 21: Verriegelungsbalken
- 22: Schwenkarm am Verriegelungsbalken
- 23: Schwenkarm am Verriegelungsbalken
- 24: Rastnase
- 25: Rastnase
- 26: Gewindespindel
- 27: Handkurbel
- 28: Werkzeug für Betätigungsvorrichtung 16
- 29: Betätigungsvorrichtung (Figur 2)
- 30: Welle (Figur 2)
- 31: Kulissenanordnung
- 32: Kulissenkörper (Blechteil)
- 33: Schneckengang
- 34: Welle
- 35: Gestrichelte Linie
- 36: Steuerstift
- 37: Kontur an der Stirnseite der Welle 34
- 38: Pfeil für Drehung der Welle 34
- 39: Pfeil für Verschiebung des Schiebers 30
- 40: Abschnitt des Schneckenganges 33 (geringe Steigung)
- 41: Abschnitt des Schneckenganges 33 (starke Steigung)
- 42: Schieber (Figur 3)
- 43: Kulissenanordnung
- 44: Welle
- 45: Steuerstift
- 46: Schneckengang
- 47: Blendkragen
- 48: Sichtfenster im Blendkragen
- 49: Kontur an der Stirnseite der Welle 44
- 50: (vorderer) Kulissenkörper
- 51: (hinterer) Kulissenkörper
- 52: Stirnfläche des Kulissenkörpers 50
- 53: Stirnfläche des Kulissenkörpers 51
- 54: Flansch am Kulissenkörper 50
- 55: Flansch am Kulissenkörper 51
- 56: Befestigungsöffnung im Flansch 54 bzw. 55
- 57: Zentrierzapfen am Flansch 55
- 58: Aufnahmeöffnung im Flansch 54
- 59: Rücksprung in der Stirnfläche 53
- 60: Schraubenfeder
- 61: Tragschenkel am Schieber 42
- 62: Ansatz am Blendkragen 47
- 63: Absatz der Welle 44
- 64: Verbindungsstift
- 65: Montageschenkel am Schieber 42
- 66: Seitenwand am Geräteeinschub 1
- 67: Durchtrittsfenster in der Seitenwand 66
- 68: Hilfsschalter
- 69: Betätigungsarm
- 70: Kontakteinheit (feststehend)
- 71: Abschnitt des Schneckenganges 46 (geringe Steigung)
- 72: Abschnitt des Schneckenganges 46 (starke Steigung)
- 73: Werkzeug (Drehknauf)

## Patentansprüche

1. Geräteeinschub (1) für eine Schaltanlage mit Hilfstrennkontakten (8), die mittels einer am Geräteeinschub (1) angeordneten und an einer Bedienfront (3) zugänglichen Betätigungsvorrichtung (16; 19) zu schließen oder zu öffnen sind, wobei am Geräteeinschub (1) eine den Hilfstrennkontakten (8) zugehörige Kontakteinheit (14) mittels eines Schiebers (15; 30; 42) bewegbar geführt ist,
**dadurch gekennzeichnet, dass**
die Betätigungsvorrichtung (16; 19) eine im Geräteeinschub (1) drehbar gelagerte und mittels eines Werkzeuges (28; 73) betätigbare Welle (34; 44) aufweist und dass an dem Schieber (15; 30; 42) eine Kulissenanordnung (31; 43) angebracht ist, die mit einem von der Welle (34; 44) radial abragenden Steuerstift (36; 45) zusammenwirkt.

2. Geräteeinschub nach Anspruch 1,
**dadurch gekennzeichnet, dass**
die Kulissenanordnung (31; 43) einen Schneckengang (40; 46) mit wenigstens zwei Abschnitten (40, 41; 71, 72) von unterschiedlicher Steigung aufweist, von denen der eine Abschnitt (40; 72) bezogen auf eine Drehung der Welle (34; 44) eine zum Schließen der Hilfstrennkontakte (8) geeignete erhöhte Kraftübersetzung aufweist.

3. Geräteeinschub nach Anspruch 1 oder 2,
**dadurch gekennzeichnet, dass**
die Kulissenanordnung (43) durch zwei mit dem Schieber (42) fest verbundene, hohlzylindrische und zu der Welle (44) koaxial angeordnete Kulissenkörper (50; 51) gebildet ist, deren einander zugewandte Stirnflächen (52; 53) einen den Steuerstift (45) aufnehmenden Schneckengang (46) begrenzen.

4. Geräteeinschub nach Anspruch 2 oder 3,
**dadurch gekennzeichnet, dass**
der Schneckengang (46) an wenigstens einem Ende einen Abschnitt (59) mit entgegengesetzter Steigung aufweist und dass eine die Kulissenanordnung (43) axial vorspannende Feder (60) eine Rastung der Welle (44) in einer Endstellung bewirkt.

5. Geräteeinschub nach einem der Ansprüche 2 bis 4,
**dadurch gekennzeichnet, dass**
die Kulissenkörper (50, 51) je einen radial abragenden Flansch (54, 55) und der Schieber (42) einen mit den Flanschen (54, 55) zu verbindenden Tragschenkel (61) besitzt.

6. Geräteeinschub nach Anspruch 5,
**dadurch gekennzeichnet, dass**
die Flansche (54, 55) der Kulissenkörper (50, 51) und der Tragschenkel (61) des Schiebers (42) parallel zu einander angeordnet und mittels durchgehender Befestigungsmittel fluchtend und unverdrehbar verbunden sind.

7. Geräteeinschub nach einem der vorangehenden Ansprüche,
**dadurch gekennzeichnet, dass**
die Welle (34; 44) stirnseitig mit einer zur Verbindung mit einem Werkzeug (32) geeigneten Kontur (37; 49) versehen ist.

8. Geräteeinschub nach einem der vorangehenden Ansprüche,
**dadurch gekennzeichnet, dass**
das Werkzeug (73) als dauernd mit der Welle (34; 44) in Verbindung stehender Drehknauf ausgebildet ist.

## Claims

1. Switching device withdrawable part (1) for a switchgear assembly having auxiliary disconnection contacts (8) which can be closed or opened by means of an operating apparatus (16; 19) which is accessible from a front control panel (3) and is arranged on the switching device withdrawable part (1), with a contact unit (14) which is associated with the auxiliary disconnection contacts (8) being guided by means of a slide (15; 30; 42) on the switching device withdrawable part (1) such that it can move,
**characterized in that**
the operating apparatus (16; 19) has a shaft (34; 44) which is mounted in the switching device withdrawable part (1) such that it can rotate and can be operated by means of a tool (28; 73), and **in that** a slotted-link arrangement (31; 43) is fitted to the slide (15; 30; 42) and interacts with a control pin (36; 45) which projects radially from the shaft (34; 44).

2. Switching device withdrawable part according to Claim 1,
**characterized in that**
the slotted-link arrangement (31; 43) has a worm gear (40; 46) with at least two sections (40, 41; 71, 72) with different pitches, of which one section (40; 72) has an increased force step-up ratio, which is suitable for closing the auxiliary disconnection contacts (8) with respect to rotation of the shaft (34; 44).

3. Switching device withdrawable part according to Claim 1 or 2,
**characterized in that**
the slotted-link arrangement (43) is formed by two slotted-link bodies (50; 51), which are firmly connected to the slide (42), are hollow and cylindrical and are arranged coaxially with respect to the shaft (44), and whose mutually facing end surfaces (52; 53) bound a worm gear (46) which holds the control pin (45).

4. Switching device withdrawable part according to Claim 2 or 3,
**characterized in that**
the worm gear (46) has a section (59) with an opposite pitch at at least one end, and **in that** a spring (60) which axially prestresses the slotted-link arrangement (43) produces a latch for the shaft (44) in one end position.

5. Switching device withdrawable part according to one of Claims 2 to 4,
**characterized in that**
the slotted-link bodies (50, 51) each have a radially projecting flange (54, 55), and the slide (42) has a supporting limb (61) which can be connected to the flanges (54, 55).

6. Switching device withdrawable part according to Claim 5,
**characterized in that**
the flanges (54, 55) on the slotted-link bodies (50, 51) and the supporting limb (61) on the slide (42) are arranged parallel to one another and are connected by means of continuous attachment means such that they are aligned and cannot rotate.

7. Switching device withdrawable part according to one of the preceding claims,
**characterized in that**
the shaft (34; 44) is provided at the end with a contour (37; 49) for connection to a tool (32).

8. Switching device withdrawable part according to one of the preceding claims,
**characterized in that**
the tool (73) is in the form of a rotary knob which is permanently connected to the shaft (34; 44).

## Revendications

1. Unité ( 1 ) enfichable pour une installation de distribution ayant des contacts ( 8 ) auxiliaires de séparation qui peuvent être fermés ou être ouverts au moyen d'un dispositif ( 16,19 ) d'actionnement disposé sur l'unité ( 1 ) enfichable et accessible sur une face ( 3 ) avant de service, une unité ( 14 ) de contact, appartenant aux contacts ( 8 ) auxiliaires de séparation, étant guidée de manière mobile sur l'unité ( 1 ) enfichable au moyen d'un coulisseau ( 15,30,42 )
**caractérisée en ce que** le dispositif ( 16,19 ) d'actionnement a un arbre ( 34,44 ) monté tournant dans l'unité ( 1 ) enfichable et pouvant être actionné au moyen d'un outil ( 28,73 ) et **en ce que** sur le coulisseau ( 15,30,42 ) est monté un dispositif ( 31,43 ) à coulisse, qui coopère avec un doigt ( 36,45 ) de commande dépassant radialement de l'arbre ( 34,44 ).

2. Unité ( 1 ) enfichable suivant la revendication 1,
**caractérisée en ce que**
le dispositif ( 31,43 ) à coulisse a un filet ( 40,46 ) de vis ayant au moins deux sections ( 40,41,71,72 ) de pas différents, dont la première section ( 40,72 ) a, rapporté à une rotation de l'arbre ( 34,44 ), une transmission de force augmentée, propre à fermer les contacts ( 8 ) auxiliaires de séparation.

3. Unité ( 1 ) enfichable suivant la revendication 1 ou 2,
**caractérisée en ce que**
le dispositif ( 43 ) à coulisse est formé par deux pièces ( 50,51 ) de coulisse reliées rigidement au coulisseau ( 42 ), cylindriques creuses et disposées coaxialement à l'arbre ( 44 ) dont les surfaces ( 52,53 ) frontales tournées l'une vers l'autre délimitent un filet ( 46 ) de vis recevant le doigt ( 45 ) de commande.

4. Unité ( 1 ) enfichable suivant la revendication 2 ou 3,
**caractérisée en ce que**
le filet ( 46 ) de vis a, à au moins une extrémité, une section ( 59 ) de pas en sens contraire et **en ce qu'**un ressort ( 60 ) mettant le dispositif ( 43 ) à coulisse sous tension axiale préalable provoque un encliquetage de l'arbre ( 44 ) dans une position d'extrémité.

5. Unité ( 1 ) enfichable suivant l'une des revendications 2 à 4,
**caractérisée en ce que**
les pièces ( 50,51 ) de coulisse ont chacune une bride ( 54,55 ) faisant saillie radialement et le coulisseau ( 42 ) a une branche ( 61 ) porteuse à assembler aux brides ( 54,55 ).

6. Unité ( 1 ) enfichable suivant la revendication 5,
**caractérisée en ce que**
les brides ( 54,55 ) des pièces ( 50,51 ) de coulisse et la branche ( 61 ) porteuse du coulisseau ( 42 ) sont parallèles entre elles et sont assemblées en alignement et sans pouvoir tourner à l'aide de moyens de fixation traversant.

7. Unité ( 1 ) enfichable suivant l'une des revendications précédentes,
**caractérisée en ce que**
l'arbre ( 34,44 ) est pourvu du côté frontal d'un contour ( 37,49 ) propre à l'assemblage à un outil ( 32 ).

8. Unité ( 1 ) enfichable suivant l'une des revendications précédentes,
**caractérisée en ce que**
l'outil ( 73 ) est constitué sous la forme d'un bouchon tournant en liaison permanente avec l'arbre ( 34,44 ).
